# EUROPEAN PATENT APPLICATION

(11) **EP 4 312 120 A1**
(43) Date of publication of application: **31.01.2024**
(21) Application number: 23187359.7
(22) Date of filing: 24.07.2023
(51) Int. Cl.: G06F 8/10, G06F 8/35

(54) **UML PEER REVIEW CAPABILITY**

(30) Priority: 25.07.2022 US 202217872648
(71) Applicant: Rockwell Collins, Inc., Cedar Rapids, IA 52498 (US)
(72) Inventor: MUXEN, Andrew B., Cedar Rapids, IA, 52302 (US)
(74) Representative: Dehns

(57) **Abstract**

A profile (110) for a tool implementing a unified modeling language (UML) is described. The profile (110) extends the UML to include peer review functionality. The profile (110) includes stereotypes and customizations which generate peer review elements, findings, artifacts, checklists, and the like. The peer review elements are associated with the findings, the artifacts, and the checklists. The association between the elements permits a reviewer to more easily review the peer review process. In particular, the finding elements are associated with reviewed artifacts by an against relationship.

## Description

### TECHNICAL FIELD

The present invention generally relates to modeling environments, and more specifically to extensions for a model in Unified Modeling Language (UML).

### BACKGROUND

Models may be generated by one or more tools according to any number of models-based systems engineering (MBSE) principles. The need to peer review model is something that applies to customer models or models that are shared externally, with review data. Peer reviews of models is challenging because no peer review tools operate natively in the tool. In particular, UML and software tools implementing UML are difficult to support review of a model by review. Therefore, it would be advantageous to provide a device, system, and method that cures the shortcomings described above.

### SUMMARY

A system is described, in accordance with one or more embodiments. In some embodiments, the system includes a memory maintaining program instructions. In some embodiments, the system includes a processor configured to execute the program instructions causing the processor to configure an object-oriented modeling tool with at least one profile. In some embodiments, the at least one profile extends a visual modeling language according to a meta model. In some embodiments, the meta model includes a peer review element, a participant element, a finding element, a checklist element, and an artifact element, a participant instance of the participant element, a checklist instance of the checklist element, and a reviewed artifact of the artifact element. In some embodiments, the peer review element is associated with the finding element, the participant instance, the checklist instance, and the reviewed artifact. In some embodiments, the finding element is associated with the reviewed artifact by an against relationship.

A method is described, in accordance with one or more embodiments. In some embodiments, the method includes executing, by a processor, program instructions maintained on a memory medium. In some embodiments, the program instructions cause the processor to configure an object-oriented modeling tool with at least one profile. In some embodiments, the at least one profile extends a visual modeling language according to a meta model. In some embodiments, the meta model includes a peer review element, a participant element, a finding element, a checklist element, an artifact element, a participant instance of the participant element, a checklist instance of the checklist element, and a reviewed artifact of the artifact element. In some embodiments, the peer review element is associated with the finding element, the participant instance, the checklist instance, and the reviewed artifact. In some embodiments, the finding element is associated with the reviewed artifact by an against relationship.

### BRIEF DESCRIPTION OF THE DRAWINGS

Implementations of the concepts disclosed herein may be better understood when consideration is given to the following detailed description thereof. Such description makes reference to the included drawings, which are not necessarily to scale, and in which some features may be exaggerated and some features may be omitted or may be represented schematically in the interest of clarity. Like reference numerals in the drawings may represent and refer to the same or similar element, feature, or function. In the drawings:
FIG. 1 depicts a simplified block diagram of a system, in accordance with one or more embodiments of the present disclosure.
FIG. 2 depicts a package of a peer review structure, in accordance with one or more embodiments of the present disclosure.
FIG. 3A depicts a peer review profile diagram, in accordance with one or more embodiments of the present disclosure.
FIG. 3B depicts an artifacts profile diagram, in accordance with one or more embodiments of the present disclosure.
FIG. 3C depicts a checklist profile diagram, in accordance with one or more embodiments of the present disclosure.
FIG. 3D depicts a findings profile diagram, in accordance with one or more embodiments of the present disclosure.
FIG. 3E depicts a participant and instance profile diagram, in accordance with one or more embodiments of the present disclosure.
FIG. 3F depicts a reviewed item profile diagram, in accordance with one or more embodiments of the present disclosure.
FIGS. 4A-4O depict an activity diagram, in accordance with one or more embodiments of the present disclosure.
FIG. 5 depicts a state machine diagram of a peer review state, in accordance with one or more embodiments of the present disclosure.
FIG. 6 depicts a state machine diagram of a finding state, in accordance with one or more embodiments of the present disclosure.

### DETAILED DESCRIPTION OF THE INVENTION

Before explaining one or more embodiments of the disclosure in detail, it is to be understood that the embodiments are not limited in their application to the details of construction and the arrangement of the components or steps or methodologies set forth in the following description or illustrated in the drawings. In the following detailed description of embodiments, numerous specific details are set forth in order to provide a more thorough understanding of the disclosure. However, it will be apparent to one of ordinary skill in the art having the benefit of the instant disclosure that the embodiments disclosed herein may be practiced without some of these specific details. In other instances, well-known features may not be described in detail to avoid unnecessarily complicating the instant disclosure.

As used herein a letter following a reference numeral is intended to reference an embodiment of the feature or element that may be similar, but not necessarily identical, to a previously described element or feature bearing the same reference numeral (e.g., 1, 1a, 1b). Such shorthand notations are used for purposes of convenience only and should not be construed to limit the disclosure in any way unless expressly stated to the contrary.

Further, unless expressly stated to the contrary, "or" refers to an inclusive or and not to an exclusive or. For example, a condition A or B is satisfied by any one of the following: A is true (or present) and B is false (or not present), A is false (or not present) and B is true (or present), and both A and B are true (or present).

In addition, use of "a" or "an" may be employed to describe elements and components of embodiments disclosed herein. This is done merely for convenience and "a" and "an" are intended to include "one" or "at least one," and the singular also includes the plural unless it is obvious that it is meant otherwise.

Finally, as used herein any reference to "one embodiment" or "some embodiments" means that a particular element, feature, structure, or characteristic described in connection with the embodiment is included in at least one embodiment disclosed herein. The appearances of the phrase "in some embodiments" in various places in the specification are not necessarily all referring to the same embodiment, and embodiments may include one or more of the features expressly described or inherently present herein, or any combination or sub-combination of two or more such features, along with any other features which may not necessarily be expressly described or inherently present in the instant disclosure.

Reference will now be made in detail to the subject matter disclosed, which is illustrated in the accompanying drawings. Embodiments of the present disclosure are generally directed to extending a modeling language. The modeling language may include, but is not limited to a unified modeling language (UML). UML may be extended to provide a capability to define peer reviews and peer review related data and/or to peer review the elements within a model. A profile is created that extends UML with peer review elements. The peer review elements allow for the definition of a peer review, participants, findings, and checklists. The various elements may then be used by the participant to peer review the model. In some instances, UML is extended through the use of stereotypes and customizations, as will be described further herein. These elements may be augmented with validation rules that ensure peer review execution aligns with a peer review process. Thus, the UML model elements may be reviewed natively within a tool. The UML model elements allows for a richer description of the scope of the review, faster and more accurate finding creation and specification, and traceability between the review and the reviewed items.

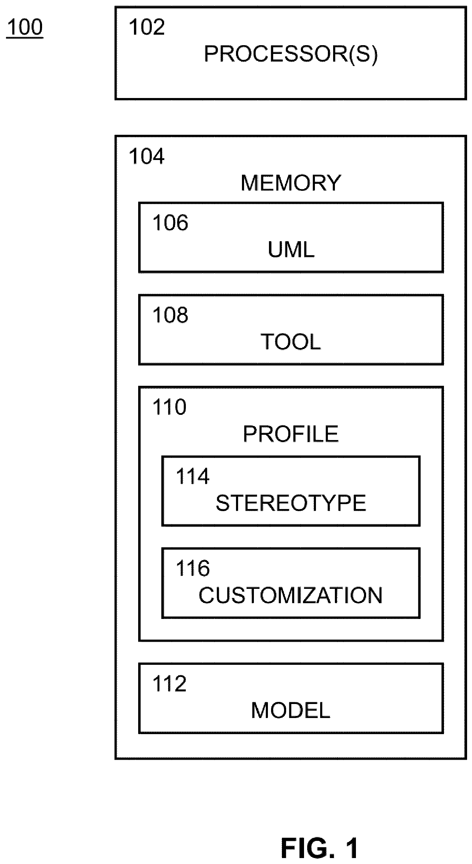

Referring now to FIG. 1, a simplified block diagram of a system 100 is described, in accordance with one or more embodiments of the present disclosure. The system 100 may include one or more processor(s) 102 and memory 104.

The processor 102 may include any processing unit known in the art. For example, the processor may include a multi-core processor, a single-core processor, a reconfigurable logic device (e.g., FPGAs), a digital signal processor (DSP), a special purpose logic device (e.g., ASICs)), or other integrated formats. Those skilled in the art will recognize that aspects of the embodiments disclosed herein, in whole or in part, can be equivalently implemented in integrated circuits, as one or more computer programs running on one or more computers (e.g., as one or more programs running on one or more computer systems), as one or more programs running on one or more processors (e.g., as one or more programs running on one or more microprocessors), as firmware, or as virtually any combination thereof, and that designing the circuitry and/or writing the code for the software/and or firmware would be well within the skill of one skilled in the art in light of this disclosure. Such hardware, software, and/or firmware implementation may be a design choice based on various cost, efficiency, or other metrics. In this sense, the processor(s) may include any microprocessor-type device configured to execute software algorithms and/or instructions. In general, the term "processor" may be broadly defined to encompass any device having one or more processing elements, which execute program instructions from memory, from firmware, or by hardware implemented functions. It should be recognized that the steps described throughout the present disclosure may be carried out by the processors.

The memory 104 may include any storage medium known in the art. For example, the storage medium may include a non-transitory memory medium. For instance, the non-transitory memory medium may include, but is not limited to, a read-only memory (ROM), a random-access memory (RAM), a magnetic or optical memory device (e.g., disk), a solid-state drive and the like. It is further noted that memory may be housed in a common controller housing with the one or more processor(s). For example, the memory and the processor may be housed in a processing unit, a desktop computer, or the like. In an alternative embodiment, the memory may be located remotely with respect to the physical location of the processor. In another embodiment, the memory maintains program instructions for causing the processor(s) to carry out the various steps described through the present disclosure. For example, the program instructions may include one or more of a UML 106, a tool 108, a profile 110, and/or a model 112.

In embodiments, the program instructions maintained on the memory 104 may include a modeling language. For example, the modeling language may include UML 106. UML 106 may be an object-oriented modeling language. As may be understood, UML 106 may generally refer to any UML specification, such as, but not limited to UML 1.X or UML 2.X. UML 106 may be defined according to one or more standards organizations, such as, but not limited to, the Object Management Group (OMG) and/or one or more International Organization for Standardization (ISO) standards.

Although much of the present disclosure is directed to the UML 106 or derivates therein, this is not intended as a limitation of the present disclosure. Much of the ideas described herein may be extended to any object-oriented modeling language that allows for extending the language. For example, SYSML2 is set to be released and won't be based on UML 106. SYSML2 includes an ability to extend the language. The ideas may be translated into SYSML2 or another modeling language. For example, element may refer to a UML class, a SYSML block, a Department of Defense (DoDAF) performer, or anything that is defined in UML 106 or the languages or extensions of UML 106.

In embodiments, the program instructions maintained on the memory 104 may include a modeling tool. For example, the modeling tool may include a tool 108. The tool 108 may implement one or more functions of UML 106. A number of tools are known in the art, such as, but not limited to Cameo^{™} (also referred to herein as MagicDraw^{™}). The Cameo^{™} tool may be modified with customizations to achieve a number of peer review functionality, as will be described herein. Although much of the present disclosure is directed to the tool being the Cameo^{™} tool, this is not intended as a limitation of the present disclosure.

The program instructions maintained on the memory 104 may include a profile 110. The profile 110 may be a package which extends a metamodel of the tool 108, in accordance with the UML specification. As used herein, metamodel may describe properties of models which are capable of being generated by the tool 108. In embodiments, the profile(s) 110 may extend the UML 106 to include peer review functionality in the tool 108. As used herein, package may refer to a number of classes, stereotypes, and/or customizations. When using the tool 108 with the profile 110, the environment includes the peer review functionality. The profile 110 may also be referred to herein as a peer review profile. The peer review may satisfy the needs of certification processes, capability maturity model integrated (CMMI), internal processes, and the like.

The system 100 may generate a model 112 using the tool 108 with the profile(s) 110. The model 112 may visually represent various objects. In embodiments, the model 112 may visually depict a peer review process. As used herein, model may refer to an abstraction of any number of physical processes occurring in the real world, such as, but not limited to a peer review process. The profile 110 may be used by a peer review project that tailors the peer review to the needs of the program. The project is then used to support peer reviews of the projects under review. As may be understood, the model 112 may be generated on a case-by-case basis and may be based on the requirements of the specific peer review process.

The profile(s) 110 may include one or more stereotypes 114. As used herein, stereotype may refer to an extensibility mechanism within UML 106. The stereotypes extend the UML language across one or more tools. In some instances, the stereotypes may be labelled by guillemets surrounding the word stereotype (i.e., «stereotype»). In some instances, the stereotypes may be represented by a colored box (e.g., a yellow color). In embodiments, the stereotypes 114 may create peer review features within the tool 108. Although the profile 110 has been described as being implemented in software as a stereotype 114 with attributes, this is not intended as a limitation of the present disclosure. Instead, the profile 110 may be implemented in software by the use of a block with value properties. A block is a SYSML element. Properties may be added to the block. The block may be instantly opened and processed. In contrast, the element that is stereotyped has to have stereotype itself to open the element.

The profile(s) 110 may also include one or more customizations 116. As used herein, customization may refer to a tool specific element used to extend the tool 108, in particular where the tool is the Cameo^{™} tool. The customizations look at the stereotype and change the tool 108 to make the stereotypes easier to use or automated in a tool. The customizations 116 defines how the tool 108 interprets and presents the stereotype 114 to the user. Without the customization 116, the stereotypes 114 may exist but must be created and then have the stereotype 114 selected from all stereotypes and then applied to the class of an element within the model 112. Using the customization 116, all elements of a certain kind having the associated stereotype are selected by default. When editing the object to look at the specification, a set of fields are displayed. Using the customizations 116, a more useful set of fields are also displayed. The customizations 116 may add a palette. The palette provides a window to grab and drop the peer review element into the diagram. For example, the customizations 116 may include a place in palette property. In some instances, the customizations may be labelled by guillemets surrounding the word customization (i.e., <<customization>>) and/or be represented by a colored box (e.g., a blue color). In embodiments, the customizations 116 may create peer review features within the tool 108. The customizations 116 enables configuration of the tool environment to integrate the peer review element in the tool. The customizations 116 may add the peer review element to the property group thereby changing how the specification window sees the peer review. As may be understood, the customization is specific to the tool implementing the modeling language, and is not intended to be a limitation of the present disclosure. In this regard, the language may be extended and the tool may be enhanced for peer review purposes without using the customizations 116.

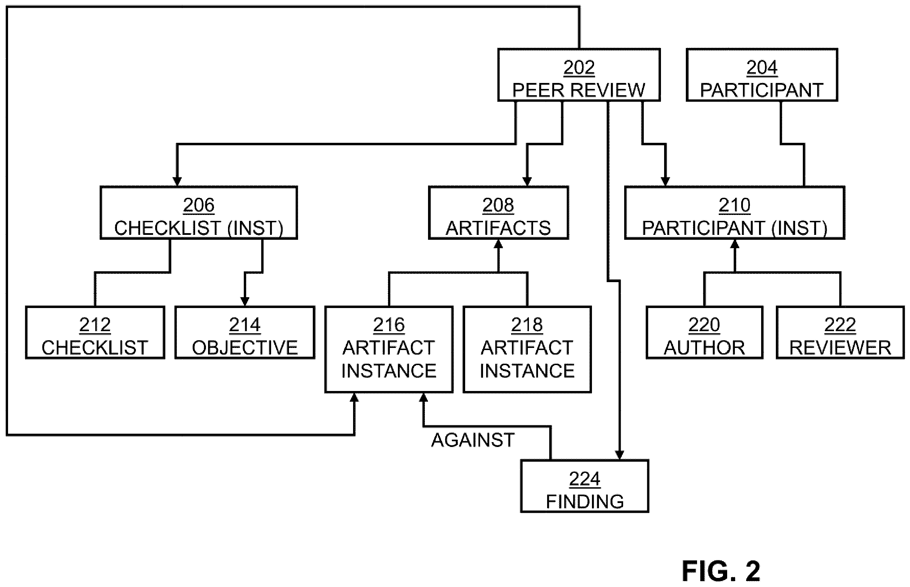

Referring now to FIG. 2, a package 200 depicting a peer review structure is described, in accordance with one or more embodiments of the present disclosure. The package 200 provides a structural diagram used for implementing a peer review process within software. In embodiments, the peer review structure may include a peer review element 202, a participant element 204, a checklist instance 206, artifact element 208, a participant instance 210, a checklist element 212, an objective 214, an artifact instance 216 of a reviewed artifact, an artifact instance 218, an author 220, a reviewer 222, and/or a finding element 224.

A review may refer to an in-depth critique of assumptions, calculations, extrapolations, alternate interpretations, methodology, acceptance criteria employed, and of conclusions drawn in the original work. Inspection reviews may confirm the adequacy of the work. A peer may refer to a person with experience producing the same type of artifact. The profile diagram includes a peer review element 202. The peer review element 202 may represent a peer review process performed in the physical environment. The peer review element may be linked with UML elements that are to be reviewed and/or have been reviewed. The various links may provide connections in the model between the elements that have been reviewed and the review that covered them. The connection gives a history or evidence that the element/diagram/relationship has been reviewed as part of the engineering process. For example, the peer review element may be linked with the reviewed element which is reviewed under the peer review. By way of another example, the peer review element may be linked with the reviewed diagram which is reviewed under the peer review. By way of another example, the peer review element may be linked with the reviewed relationship which is reviewed under the peer review. By way of another example, the peer review element may be linked with the artifact instance which is reviewed by or referenced by the peer review element. By way of another example, the peer review element may be linked with the participant instance who is a participant of the peer review element. By way of another example, the peer review element may be linked with the checklist instance which is a checklist of the peer review. By way of another example, the peer review may be linked with the finding which is a finding of the peer review. Thus, the peer review element 202 may be associated with the checklist instance 206, the artifacts element 208, the finding elements 224, and the participant instance 210. In particular, the peer review element 202 may be associated with the various elements and instances thereby indicating the participant instance 210 (e.g., associated with a human user) performed the checklist instance on the finding element of the reviewed artifact.

The peer review element 202 may further include one or more attributes, as will be described further herein. The peer review element 202 may include a unique identifier. The peer review element 202 may include a state. For instance, the state may include one or more of draft, open, complete, closed, and/or cancelled. The peer review element 202 may include a change driver. For example, there may be an engineering change that occurred, and the change driver may capture the engineering change. The peer review element 202 may include a description. The peer review element 202 may include one or more references. The peer review element 202 may include a reviewed item. In embodiments, the peer review element 202 is a stereotype of the profile 110.

The physical participants in the peer review process may be defined in software by an instance, such as the participant instance 210. The instances are instances of a participant element 204. For example, a participant may be named after each person involved in the peer review process, and then an instance may be made from the participant. The participant instance 210 may be assigned a role. The role may include the author 220, the reviewer 222, and the like. The roles may also include engineering reviewer, author, safety reviewer, quality reviewer, engineering reviewer (US located). The participant instance 210 may then be associated with the peer review element 202. The participant instance 210 may also include a duration of time performed in the given role for the associated peer review element 202. The participant instance 210 may also include a participation status, indicating whether the participant needs to review, is in process of reviewing, is done reviewing, and the like. In embodiments, the participant instance 210 is a stereotype in the profile 110.

The checklist of the peer review process may be defined in software by an instance, such as the checklist element 212 and the checklist instance 206. The checklist element 212 may be an element within the model. The checklist instance 206 may be an instance of the checklist element 212. The ability to capture checklists may be beneficial to a number of industries, such as, but not limited to, the aircraft certification industry. The checklist instance 206 can have properties of questions. The questions may be responded to using Boolean yes/no responses. For example, the checklist may include a review of the size of the design, color the diagrams, and the like. The checklist instance relates to a participant instance, or owner who is responsible for filling out that checklist. The checklist instance also relates to the peer review. The checklist instance 206 may then provide an instance of a physical checklist to be completed by the participant for the peer review process. In embodiments, the checklist instance 206 is a stereotype of the profile 110.

The objectives 214 may be statements about whether an objective was physically performed during the peer review process. For example, an objective may include did a participant accomplish the object (yes/no). The objectives 214 may also be met within the checklist instance 206. In embodiments, the objective 214 is a stereotype of the profile 110.

An artifact may represent information that is used or produced during the peer review process. The artifact may refer to an item produced by the process that has value to the organization. The form of the artifact is determined by the project and may include a document, a database of information, a software source, a mechanical model, and the like. The artifact may be defined in software by an element, such as the artifact element 208. The artifact element 208 is a model element in the profile. The artifact element 208 may point to a larger model that is being reviewed in the context. The artifact element 208 may include one or more attributes. For example, the artifact element 208 may include a starting version. By way of another example, the artifact element 208 may include a resulting version. By way of another example, the artifact element may include a reviewed version. The artifact element 208 may include one or more instances of the artifact instance 216 which is a reviewed artifact. The artifact instance 216 may be a reviewed artifact reviewed by the peer review element 202. The artifact element 208 may also include an artifact instance 218 which is a reference artifact. The artifact instance 218 may be a referenced artifact referenced by the peer review element 202. In some instances, a reviewed element, a reviewed diagram, and/or a reviewed relationship may be considered an artifact. In embodiments, the artifact element 208 is a stereotype of the profile 110. An artifact can have zero to many reviewed instances.

The artifact element 208 may reference some element within the model. For example, code may be implemented based on a set of requirements defined in an element. The requirements are the reference and the code is what is being reviewed. Alternatively, the model is opened based on these requirements. The requirements might be the reference. Alternatively, another part of the model might be a reference and the artifact element 208 might be the reviewed item. The artifact element 208 may point to the various references. Instead of pointing to the particular elements, such as the reviewed element, the reviewed diagram, and the reviewed relationship, the artifact instance may provide a collection of an artifact that is modified and needs to be reviewed.

A finding may refer to a specific or non-specific concern or problem to be recorded during the review process. The findings made by the physical participants during the peer review process. The findings may be defined in software by an element, such as the finding element 224. The finding may thus be represented as a model element. The finding element 224 may be created when the participant finds a problem. The finding element 224 may be associated with the peer review element 202, such as a finding of the peer review element. The finding can relate to a participant instance. The finding is also related to the peer review. The finding element 224 may include a number of attributes. For example, the finding element 224 may include a state. The state may provide tracking for the state of the finding. By way of another example, the finding element 224 may include a description which may be stored as a string. By way of another example, the finding element 224 may include a proposed solution which may be stored as a string. By way of another example, the finding element 224 may include an implementation description which may be stored as a string. By way of another example, the finding element 224 may include a rejection/cancellation description which may be stored as a string. By way of another example, the finding element 224 may include a finding identification. The user who implements the finding element 224 may be designated as an implementer. The finding element 224 may be rejected or cancelled with an associated reason. The rejection or cancellation of the finding may also include a separate identification. In embodiments, the finding element 224 is a stereotype of the profile 110.

One challenge during peer reviews, is that a peer review author may have difficulty defining problems and pointing to the problem. The finding element 224 may be associated with ethe reviewed artifact by an against relationship. The finding element 224 can be made against an element pointing the finding to the element. The against relationship leads the person reading the finding straight to what is being found against and what might be impacted by that finding.

Version may refer to a unique identifier for a specific artifact to be reviewed (e.g., version number, generation number, time-date stamp, etc.). Reviewer may refer to a person who examines the artifact to ensure the artifact fulfills stakeholder, process, and project requirements. Quality may refer to an individual delegated the authority to render judgement in all matters pertaining to quality. Dispositioned may refer to a finding which is dispositioned when a decision is made regarding the requested change. Enumeration may refer to a data type of the tool which defines a list of strings. Numbering scheme may refer to a mechanism within the tool to automatically number the elements of the model. Instance may refer to an entity within the model. The entity may refence one or more other elements and may own one or more other elements. Element may refer to a component of a model, a language, or a tool. Attributes may refer to properties of an element or an instance. Instance Specification may refer to an existence of an entity in a model. Meta Class may refer to an instance of a class element with the stereotype of meta class. Allocate may refer to a dependency of UML.

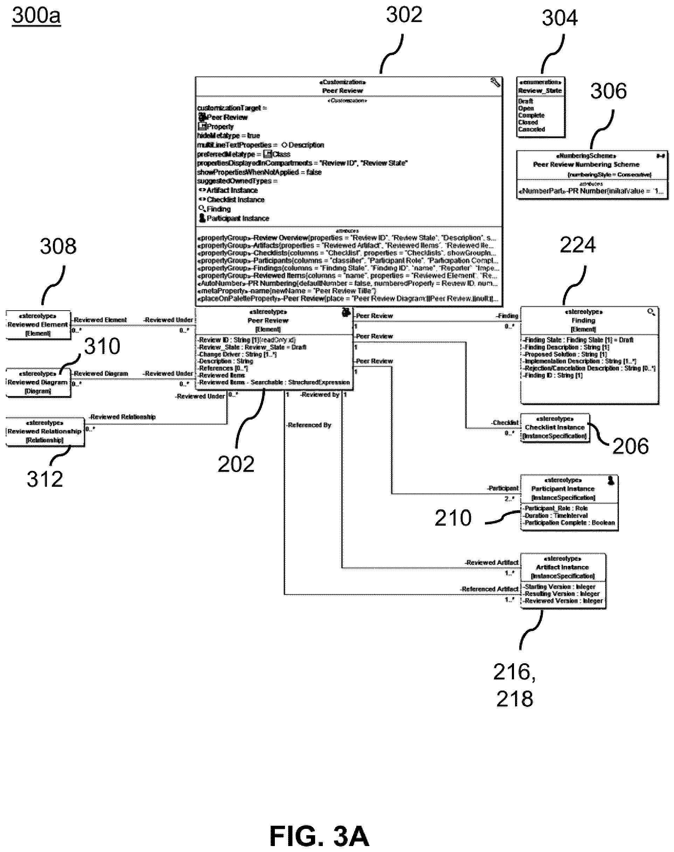

Referring generally to FIGS. 3A-3F one or more profile diagrams are described. As used herein, profile diagram may refer to a diagram that depicts a metamodel including stereotypes represented as classes with the guillemet of «stereotype» and including customizations represented as classes with the guillemet of «customization». The profile diagrams may depict implementations of a peer review profile, an artifact profile, a checklist profile, a finding profile, a participant and instance profile, and/or a reviewed item. As may be understood, the various profile diagrams depicted are not intended to be limiting. For example, the various features of the peer review profile, an artifact profile, a checklist profile, a finding profile, a participant and instance profile, and/or a reviewed item may be implemented in a single common profile and/or multiple profiles. One or more exemplary attributes or properties are now described. As may be understood, the exemplary properties and/or attributes are not intended to be limiting.

The profile diagrams may include one or more of the peer review element 202, the participant element 204, checklist instance 206, artifact element 208, participant instance 210, checklist element 212, objective 214, artifact instance 216, artifact instance 218, author 220, reviewer 222, finding element 224, a peer review customization 302, a review state enumeration 304, peer review numbering scheme 306, a reviewed element 308, a reviewed diagram 310, a reviewed relationship 312, an artifact instance customization 314, an instance specification 316, checklist instance customization 318, a checklist instance specification metaclass 320, a checklist question customization 322, a checklist response enumeration 324, a slot metaclass 326, a checklist question stereotype 328, a checklist customization 330, a property metaclass 332, an invisible stereotype 334, a checklist property 336, a checklist question type 338, a finding customization 340, an element metaclass 342, a finding numbering scheme 344, a finding state enumeration 346, a finding state 348, a dependency metaclass 350, an against customization 352, an against stereotype 354, a drag and drop specification 356, an exemplary finding 358, an element metaclass 360, a participant customization 362, an instance specification metaclass 364, a role enumeration 366, a participant instance customization 368, a reviewed item customization 370, a relationship metaclass 372, an element metaclass 374, and/or a diagram metaclass 376. In some instances, one or more of the above-described elements, customizations, instances, and the like may be split into any number of profiles.

The peer review customization 302 provides a mechanism to review models. The peer review customization 302 may include one or more attributes. For example, the peer review customization 302 may include a customization target. The customization target may indicate the stereotype or meta class being customized. The customization target may include one or more of the artifact instance 216, the artifact instance 218, the checklist instance 206, the finding element 224, and/or the participant instance 210. By way of another example, the peer review customization 302 may include a hide meta type property. By way of another example, the peer review customization 302 may include a multi-line text property. By way of another example, the peer review customization 302 may include a preferred meta type. By way of another example, the peer review customization 302 may include a property displayed in compartments. By way of another example, the peer review customization 302 may include a show property when not applied. By way of another example, the peer review customization 302 may include a suggested owned type. For instance, the suggested owned type may include the artifact instance, the checklist instance, the finding, and the participant instance.

The review state enumeration 304 may include draft, open, complete, closed, and/or cancelled. The peer review numbering scheme 306 may include consecutive numbering for the peer review identifier of the peer revie element 202. The reviewed element 308 may include a stereotype. The reviewed element 308 may be associated with the peer review element 202 as a reviewed element which is reviewed under the peer review. The reviewed diagram 310 may include a stereotype. The reviewed diagram 310 may be associated with the peer review element 202 as a reviewed diagram which is reviewed under the peer review. The reviewed relationship 312 may include a stereotype. The reviewed relationship 312 may be associated with the peer review element 202 as a reviewed relationship which is reviewed under the peer review. The artifact instance customization 314 may include a customization target of the artifact instance 216, the artifact instance 218. The instance specification 316 may include a metaclass. The checklist instance customization 318 may include a customization target of the checklist instance 206. The checklist instance customization 318 may also include a do not suggest as type property, a hide metatype property, a preferred metatype property, a suggested owned types property, and the like. The checklist question customization 322 may include a customization target of the checklist question stereotype 328. The checklist response enumeration 324 may include one or more of yes, no, and/or not applicable. The checklist question stereotype 328 may include the checklist response enumeration 324. The checklist customization 330 may include a customization target of the checklist element 212, a hidden owned type, a preferred metatype, a suggested owned type, and the like. The checklist property 336 may include a customization target and a hide metatype.

When applying a stereotype, the name of the stereotype appears as guillemets (i.e., <<stereotypename>>) in the model. The guillemets show the stereotype is applied to a model element or instance. However, providing a visible stereotype for each of the elements being reviewed may provide sensory overload when viewing the model. In embodiments, the invisible stereotype 334 is applied. The invisible stereotype 334 may prevent the stereotype from appearing in the guillemets. The invisible stereotype may be advantageous.

The finding customization 340 may include an allowed drag and drops, an allowed relationship, a check spelling, an implementation description, a rejection/ cancellation description, a customization target, a hide metatype, an in-shortcut menu, a multiline text property, and a preferred metatype. The finding numbering scheme 344 may include a linear sequence of numbers. The finding state enumeration 346 and the finding state 348 may include draft, assigned, implemented, closed, and cancelled. The against customization 352 may include a customization target and a hide metatype. The drag and drop specification 356 may include a append mode, a relation action result, a representation text, and a source element. The participant customization 362 may include a customization target of the participant element 204 and a preferred metatype. The role enumeration 366 may include engineering reviewer, author, safety reviewer, quality reviewer, and engineering reviewer (US located). The participant instance customization 368 may include a customization target of the participant instance 210 and a do not suggest name auto completion. The reviewed item customization 370 may include customization target of the reviewed element, the reviewed diagram, and/or the reviewed relationship. The reviewed item customization 370 may also include a do not suggest as type, a hide metatype, and a show property when not applied.

Referring now to FIG. 3A, a profile diagram 300a depicting a peer review profile diagram is described, in accordance with one or more embodiments of the present disclosure. The profile diagram 300a may include the peer review element 202, the checklist instance 206, the artifact element 208, the participant instance 210, the artifact instance 216, the artifact instance 218, the finding element 224, the peer review customization 302, the review state enumeration 304, the peer review numbering scheme 306, the reviewed element 308, the reviewed diagram 310, and/or the reviewed relationship 312.

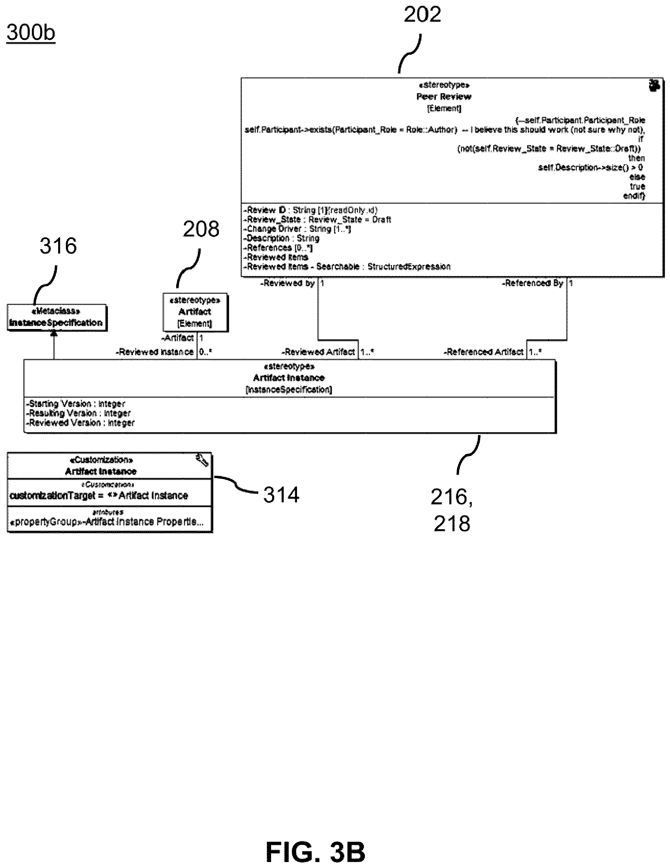

Referring now to FIG. 3B, a profile diagram 300b depicting an artifact is described, in accordance with one or more embodiments of the present disclosure. The profile diagram 300b may include the peer review element 202, the artifact element 208, the artifact instance 216, the artifact instance 218, the instance specification 316, and/or the artifact instance customization 314.

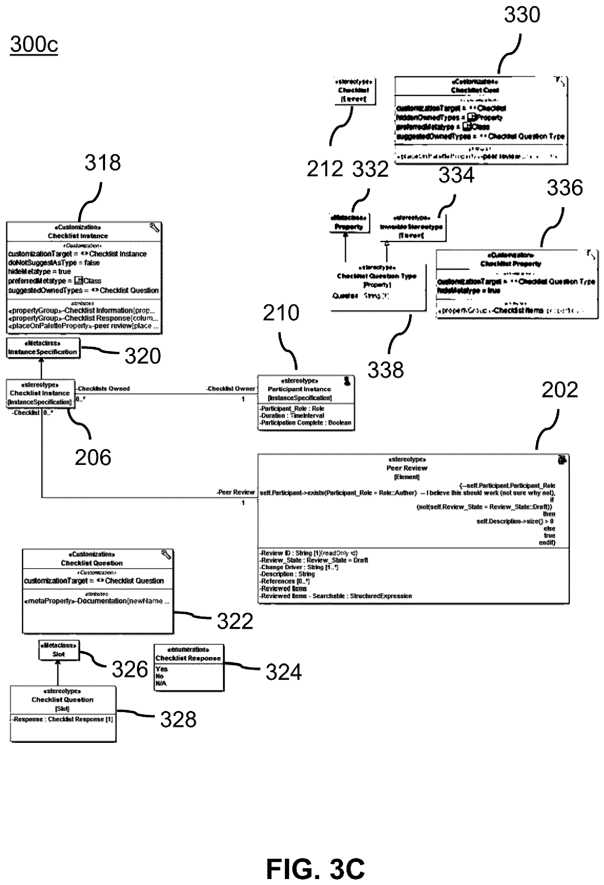

Referring now to FIG. 3C, a profile diagram 300c depicting a checklist is described, in accordance with one or more embodiments of the present disclosure. The profile diagram 300c may include the peer review element 202, checklist instance 206, artifact element 208, participant instance 210, checklist element 212, checklist instance customization 318, checklist instance specification metaclass 320, checklist question customization 322, checklist response enumeration 324, slot metaclass 326, checklist question stereotype 328, checklist customization 330, property metaclass 332, invisible stereotype 334, checklist property 336, and/or checklist question type 338.

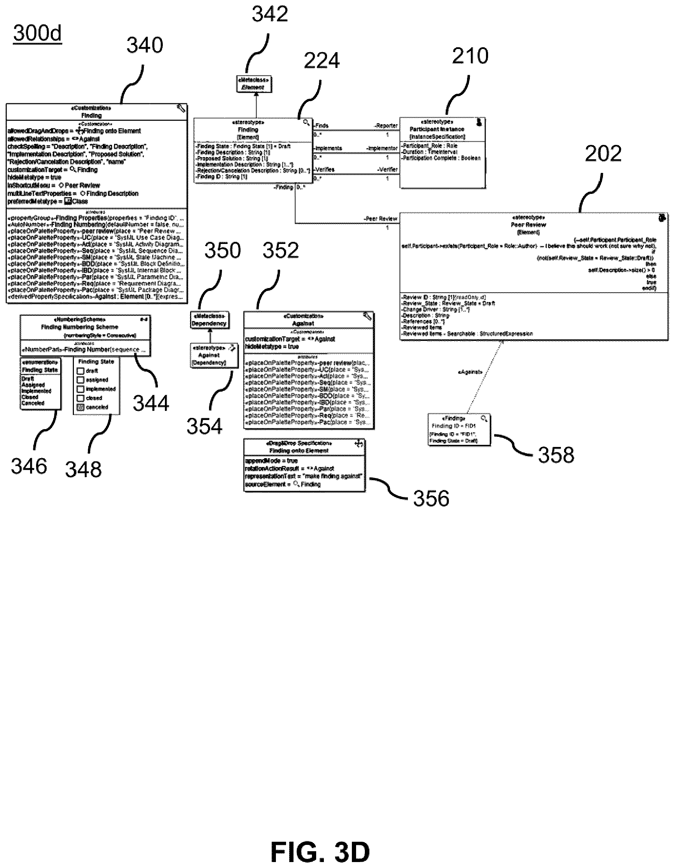

Referring now to FIG. 3D, a profile diagram 300d depicting a finding is described, in accordance with one or more embodiments of the present disclosure. The profile diagram 300d may include the peer review element 202, participant instance 210, finding element 224, finding customization 340, element metaclass 342, finding numbering scheme 344, finding state enumeration 346, finding state 348, dependency metaclass 350, against customization 352, against stereotype 354, drag and drop specification 356, and/or exemplary finding 358.

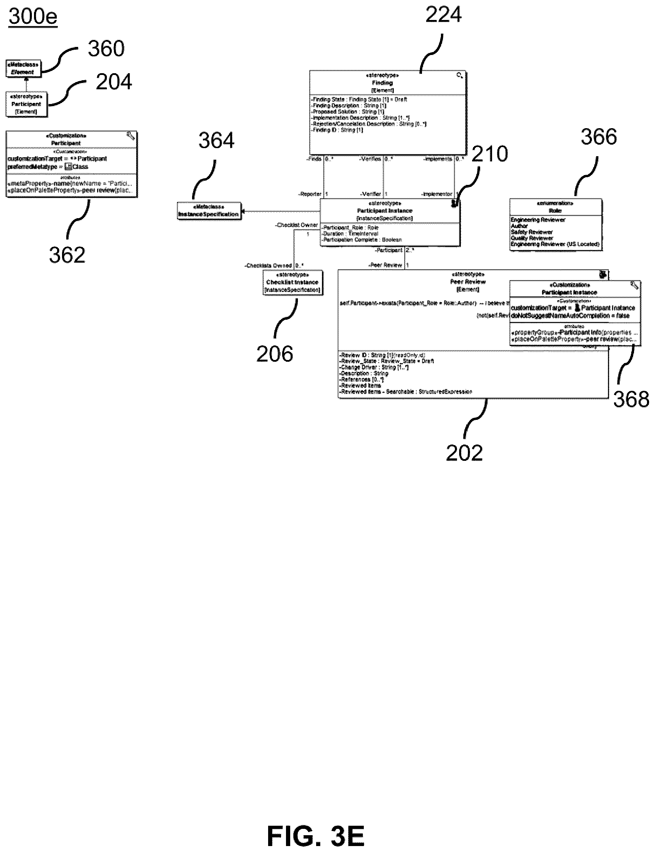

Referring now to FIG. 3E, a profile diagram 300e depicting a participants and instance profile is described, in accordance with one or more embodiments of the present disclosure. The profile diagram 300e may include the peer review element 202, the participant element 204, checklist instance 206, participant instance 210, finding element 224, element metaclass 360, participant customization 362, instance specification metaclass 364, role enumeration 366, and/or participant instance customization 368.

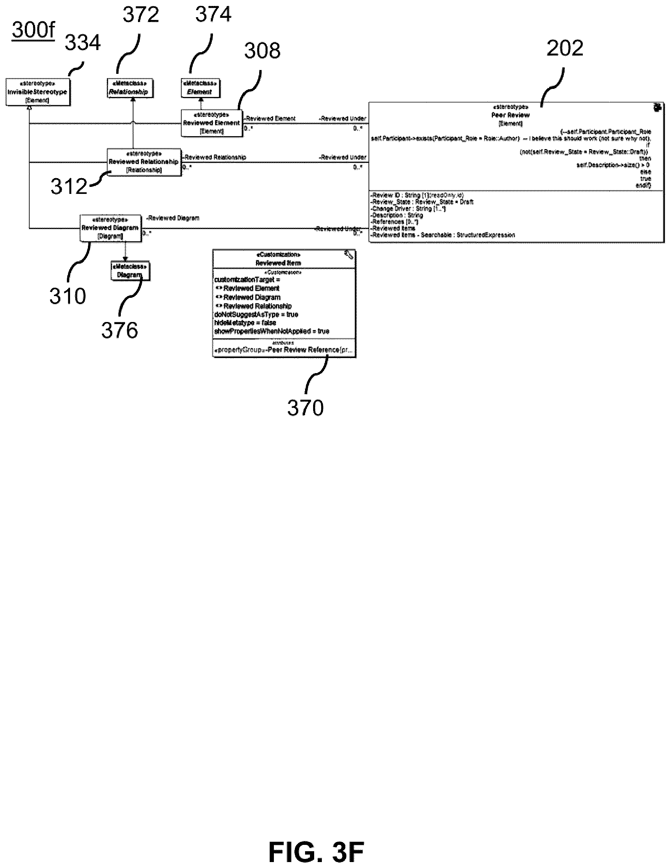

Referring now to FIG. 3F, a profile diagram 300f depicting a reviewed item profile is described, in accordance with one or more embodiments of the present disclosure. The profile diagram 300f may include the peer review element 202, reviewed element 308, reviewed diagram 310, reviewed relationship 312, invisible stereotype 334, reviewed item customization 370, relationship metaclass 372, element metaclass 374, and/or diagram metaclass 376.

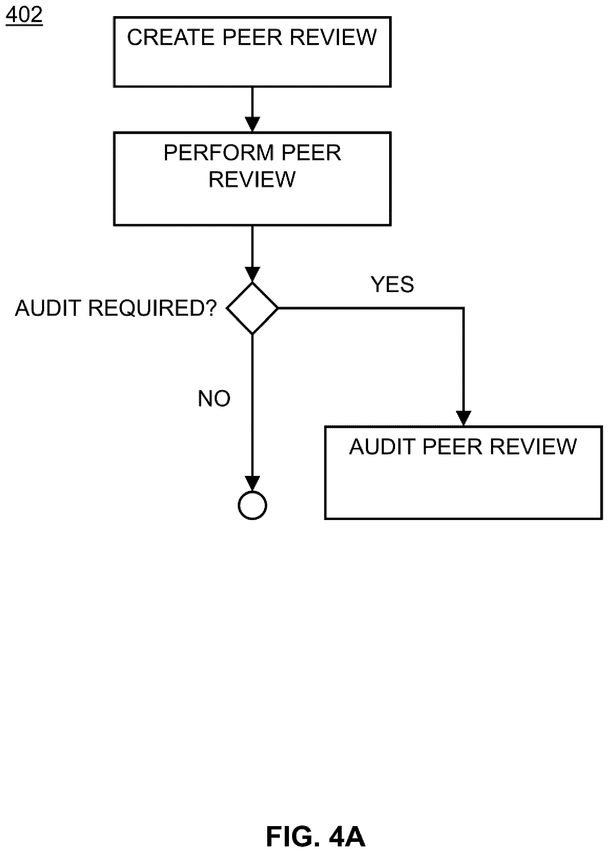

Referring generally to FIGS. 4A-4O, one or more activity diagrams are described, in accordance with one or more embodiments of the present disclosure. As may be understood, one or more steps of the activity diagrams may be performed by a human operator during a business process, where appropriate. Similarly, one or more steps of the activity diagrams may be performed by a processor of a system, where appropriate.

As depicted in FIG. 4A, an exemplary process 402 of peer reviewing is described. The exemplary process 402 may include creating a peer review, performing a peer review, determining if an audit is required, and auditing the peer review. The exemplary process 402 may be performed by a human participant and/or by a processor.

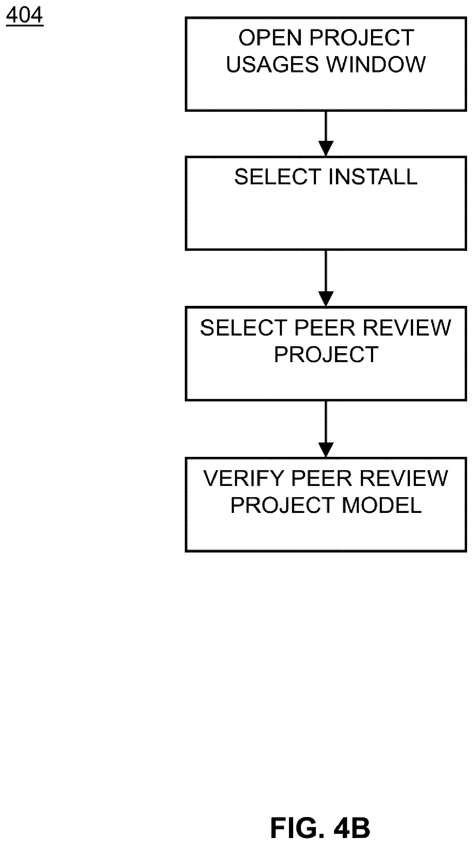

As depicted in FIG. 4B, an exemplary process 404 of adding peer review project usage is described. The exemplary process 404 may include opening a project usages window, selecting install, selecting peer review project, selecting next, selecting finish, and verifying the peer review model in project usages. The individual completing the exemplary process 404 may have the correct permissions within the tool to add the project usages. The exemplary process 404 may be performed by a human participant and/or by a processor.

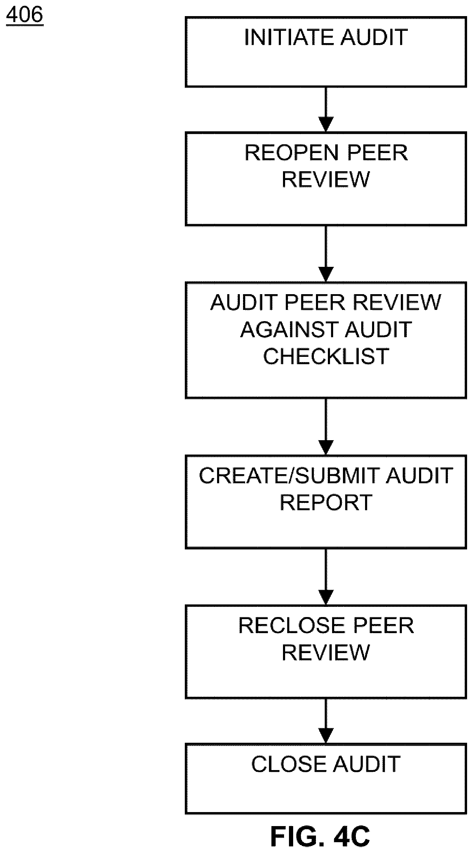

As depicted in FIG. 4C, an exemplary process 406 of auditing a peer review is described. The exemplary process 406 may include initiating an audit, reopening a peer review, auditing peer review against an audit checklist, creating audit report, submitting audit report, reclosing peer review, and closing the audit. The exemplary process 406 may be performed by a human participant and/or by a processor.

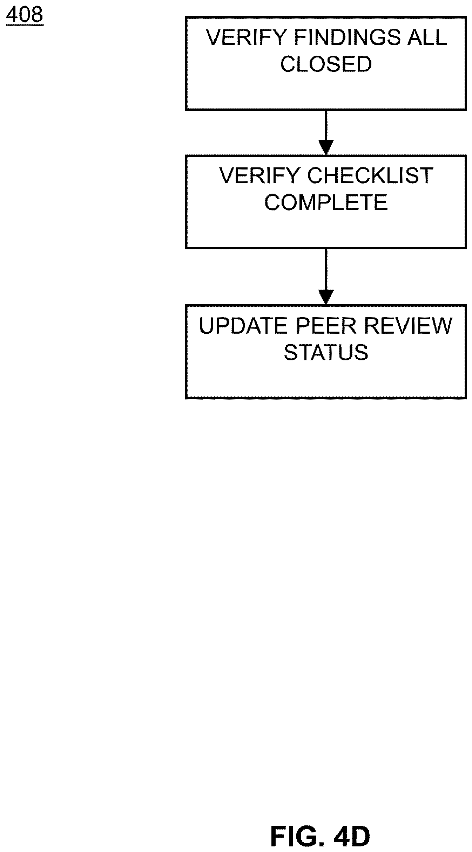

As depicted in FIG. 4D, an exemplary process 408 of closing a peer review is described. The exemplary process 408 may include verify findings are all closed, verifying checklist is completed, and updating peer review status. The exemplary process 408 may be performed by a human participant and/or by a processor.

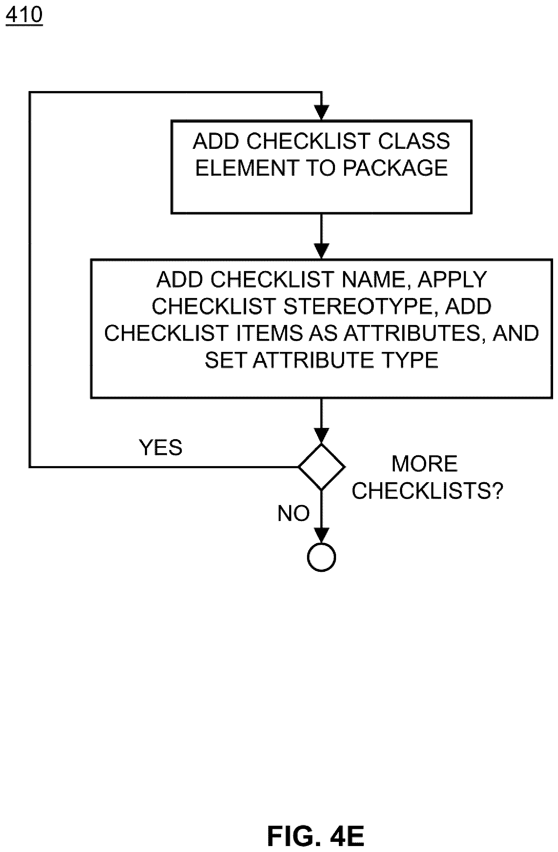

As depicted in FIG. 4E, an exemplary process 410 of creating a checklist is described. The exemplary process 410 may include navigating to checklist sub package, adding class element to sub package, adding checklist name, applying checklist stereotype, adding checklist items as attributes, and setting an attribute type. The exemplary process 410 may be performed by a human participant and/or by a processor.

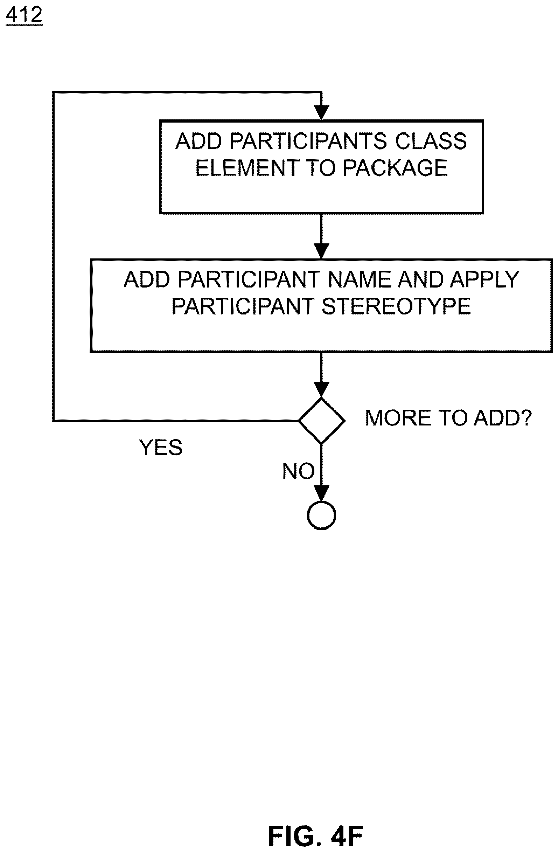

As depicted in FIG. 4F, an exemplary process 412 of creating common participants is described. The exemplary process 412 may include navigating to participants sub package, adding class element to package, adding participants name, and applying participant stereotype. The exemplary process 412 may be performed by a human participant and/or by a processor.

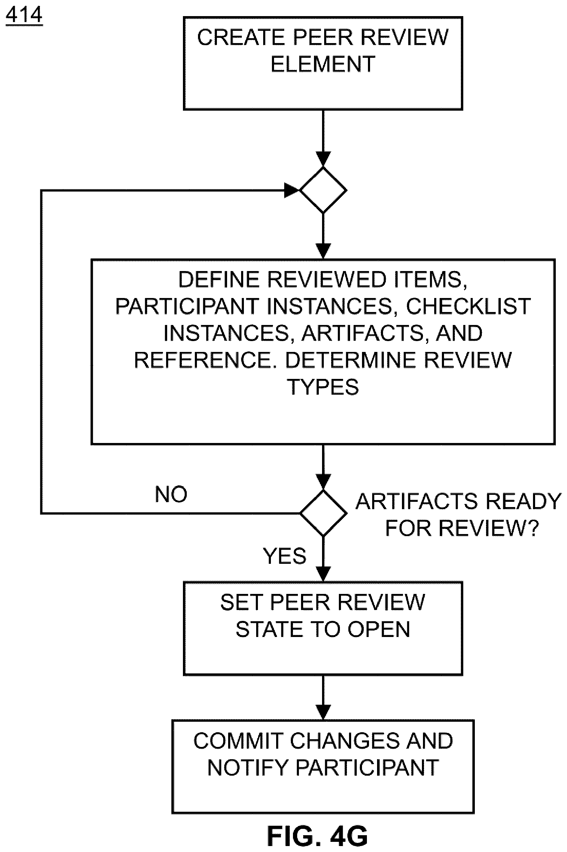

As depicted in FIG. 4G, an exemplary process 414 of creating a peer review is described. The exemplary process 414 may include creating a peer review element, defining reviewed items, defining participant instances, defining checklist instances, defining artifacts and references, determining a review type, determining whether the artifacts are ready for review, setting the peer review state to open, committing changes, and notifying participants. The exemplary process 414 may be performed by a human participant and/or by a processor.

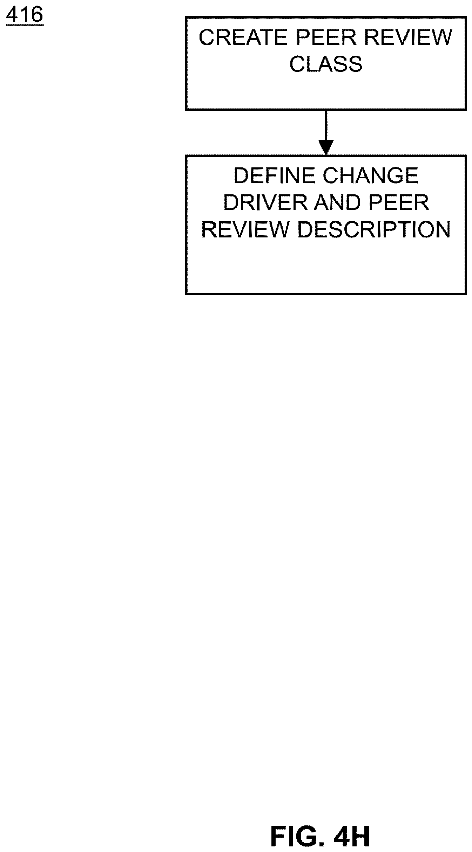

As depicted in FIG. 4H, an exemplary process 416 of creating a peer review element is described. The exemplary process 416 may include creating a peer review class, defining a change driver, and defining a peer review description. The exemplary process 416 may be performed by a human participant and/or by a processor.

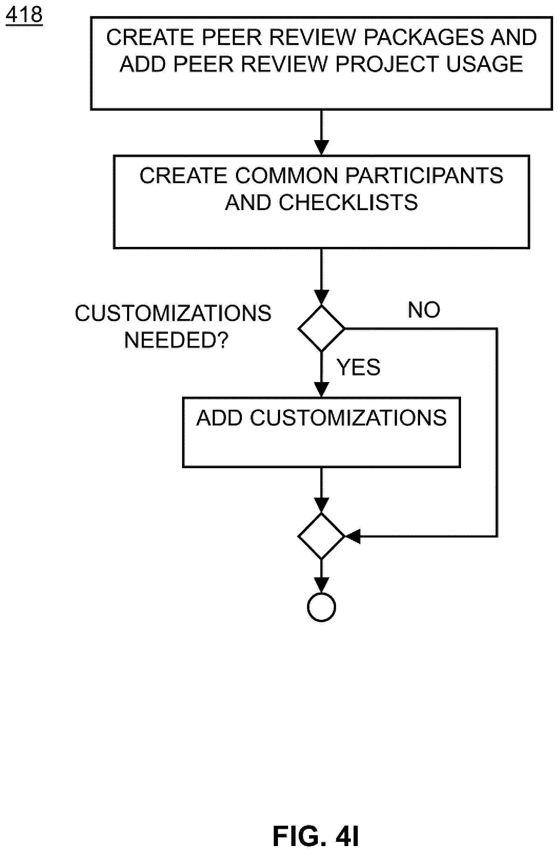

As depicted in FIG. 4I, an exemplary process 418 of creating a peer review environment is described. The exemplary process 418 may include creating a peer review package(s), adding peer review project usage, creating common participants, creating checklists, determining whether customizations are needed, and adding customizations. The exemplary process 418 may be performed by a human participant and/or by a processor.

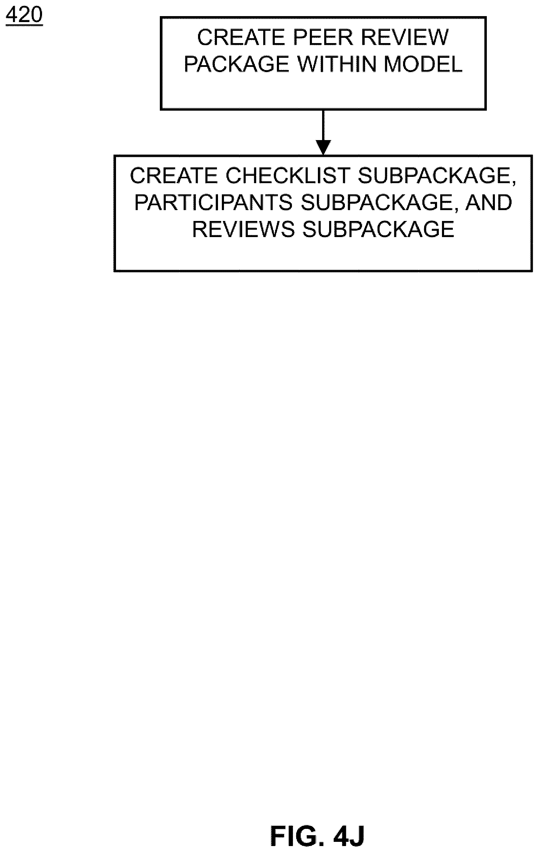

As depicted in FIG. 4J, an exemplary process 420 of creating a peer review package is described. The exemplary process 420 may include creating a peer review package within a model, creating a checklist sub package, creating a participants sub package, creating a peer reviews sub package. The sub packages listed here are recommendations for organizations and are not intended to be limiting. The exemplary process 420 may be performed by a human participant and/or by a processor.

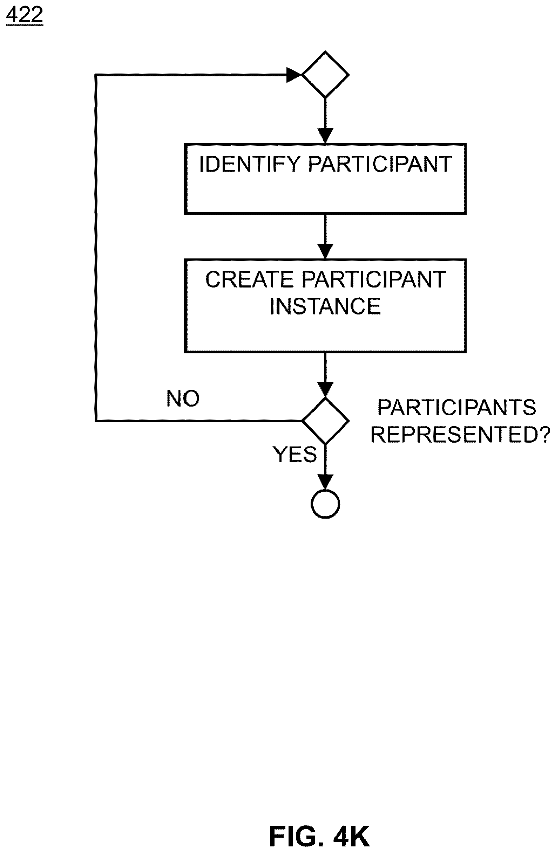

As depicted in FIG. 4K, an exemplary process 422 of defining participant instances is described. The exemplary process 422 may include identifying participants, creating a participant instance, and determining whether all appropriate participants are represented. The exemplary process 422 may be performed by a human participant and/or by a processor.

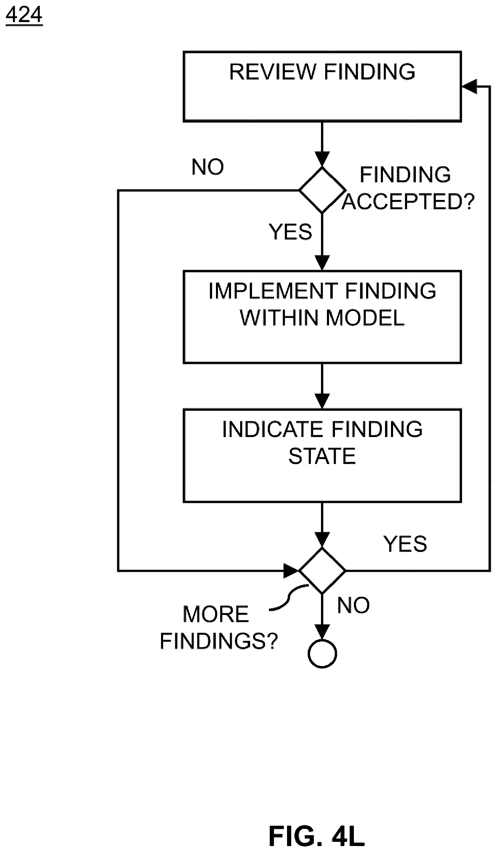

As depicted in FIG. 4L, an exemplary process 424 of implementing findings is described. The exemplary process 424 may include reviewing a finding, determining whether the finding is accepted, implementing the finding within a model, indicating finding state, reviewing updated model, and determining whether more findings exist. The exemplary process 424 may be performed by a human participant and/or by a processor.

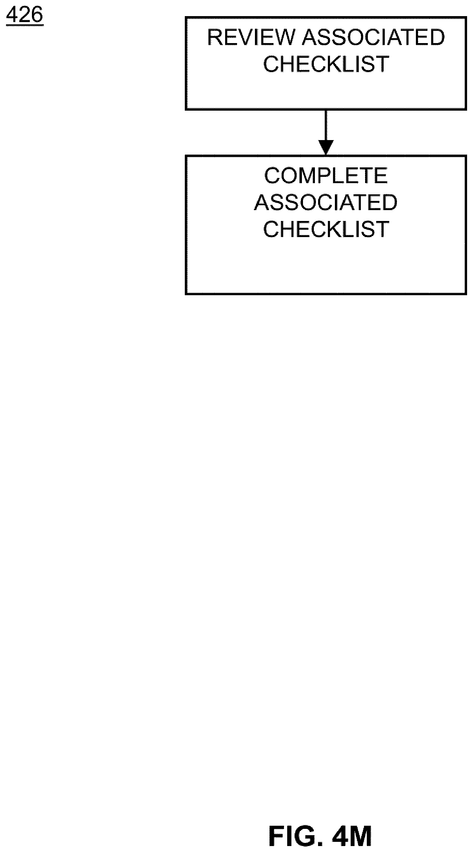

As depicted in FIG. 4M, an exemplary process 426 of managing checklists is described. The exemplary process 426 may include reviewing an associated checklist and completing the associated checklist. The exemplary process 426 may be performed by a human participant and/or by a processor.

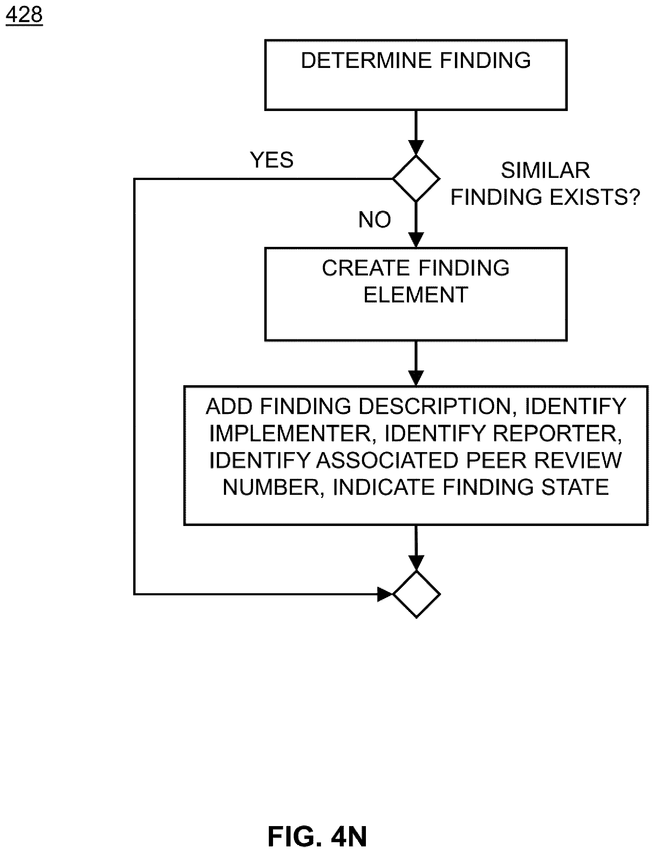

As depicted in FIG. 4N, an exemplary process 428 of managing findings is described. The exemplary process 428 may include determining a finding, determining if a similar finding exists, creating a finding element, adding finding description, identifying implementer, identifying reporter, identifying associated peer review number, indicating finding state, and determining whether further findings are identified. If a peer reviewer is in a model and sees a problem, the peer reviewer creates a finding. The peer reviewer may then add the finding to the peer review. It is contemplated, the finding may be automatically associated with the peer review. It is further contemplated that the participant of the finding may be automatically populated based on the user profile logged into the tool. The exemplary process 428 may be performed by a human participant and/or by a processor.

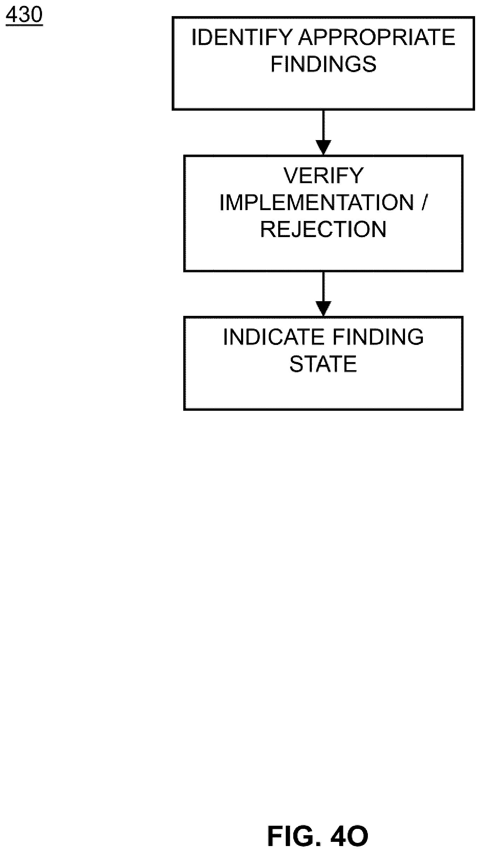

As depicted in FIG. 4O, an exemplary process 430 of verifying a finding implementation is described. The exemplary process 430 may include identifying appropriate findings, verifying implementation and/or rejection, and indicating a finding state. The exemplary process 430 may be performed by a human participant and/or by a processor.

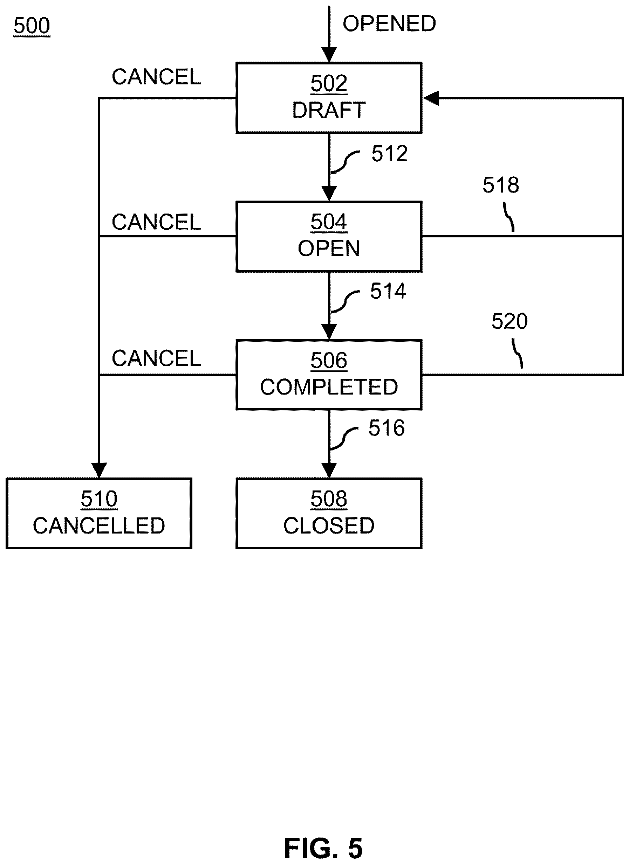

Referring now to FIG. 5, an exemplary state machine 500 of a peer review state, is described, in accordance with one or more embodiments of the present disclosure. The state machine 500 may be provided to control the peer review state of the peer review element 202 between one or more states. The state machine 500 may include one or more states for the peer review state, including a draft state 502, an open state 504, a completed state 506, a closed state 508, and a cancelled state 510. The peer review state may be set to the draft state 502 when the peer review is opened. The peer review state may be set to the open state 504 from the draft state 502 in a step 512. The step 512 may occur when the peer review articles are identified and the peer review is initiated. The peer review state may be set to the completed state 506 from the open state 504 in a step 514. The step 514 may occur once all findings are closed and/or cancelled. The peer review state may be set to the closed state 508 from the completed state 506 in a step 516. The step 516 may occur once all checklists are completed and a resulting version of all artifacts are documented. The peer review state may be set to the draft state 502 from the open state 504 in a step 518. The step 518 may include additions and/or removals of artifacts. The peer review state may be set to the draft state 502 from the completed state 506 in a step 520. The step 520 may include determining additional review is required. The peer review state may be set to the cancelled state 510 from any of the draft, open, or completed states by cancelling the peer review element 202.

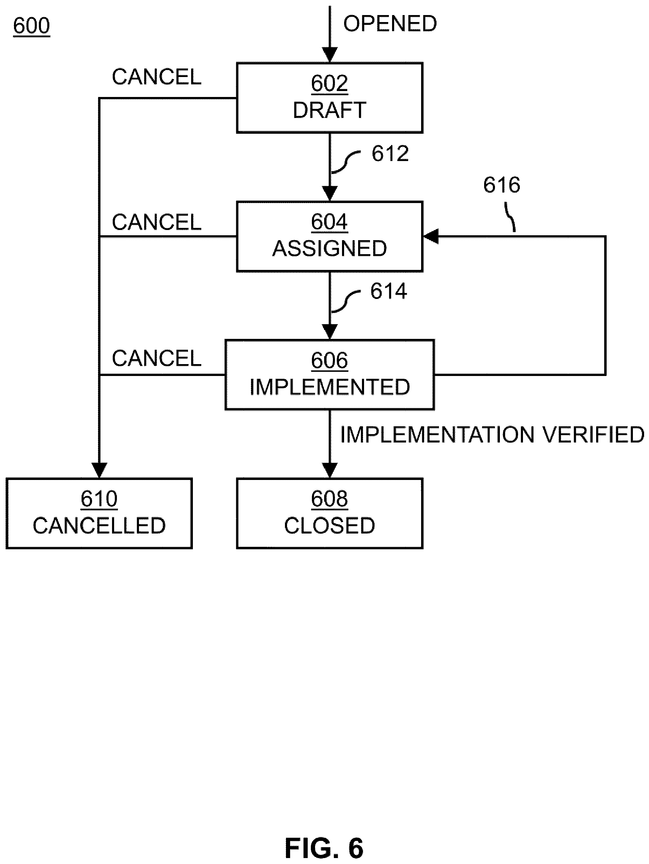

Referring now to FIG. 6, an exemplary state machine 600 of a finding state, is described, in accordance with one or more embodiments of the present disclosure. The state machine 600 may be provided to control the finding state of the finding element 224 between one or more states. The state machine 600 may include one or more states for the finding state, including a draft state 602, an assigned state 604, an implemented state 606, a closed state 608, and a cancelled state 610. The finding state may be set to the draft state 602 when the finding is opened. The finding state may be set to the assigned state 604 from the draft state 602 in a step 612. The step 612 may occur when the finding is documented. The finding state may be set to the implemented state 606 from the assigned state 604 in a step 614. The step 614 may occur once the finding is accepted. The finding state may be set to the closed state 608 from the implemented state 606 one the implementation is verified. The finding state may be set to the assigned state 604 from the implemented state 606 in a step 616. The step 616 may occur once a determination is made that further changes are necessary. The peer review state may be set to the cancelled state 610 from any of the draft, assigned, or implemented by cancelling the finding.

As may be understood, the state machine 500 and/or the state machine 600 may include additional rules other than those depicted and described. Advantageously, the state machine 500 and/or the state machine 600 may provide an indication of states and the criteria in which the system limits before moving between the states. The program instructions may cause the processor 102 to follow the rules according to the state machine 500 and the state machine 600.

Referring generally again to FIGS. 1-6.

One or more use cases for the peer review profile are now described. In one example, the peer review environment may be created. In another example, the author may create the peer review which may include an artifact and/or a reference. In another example, the author and/or the reviewer may perform a peer review process using the peer review profile. Performing the peer review process may include managing findings and/or managing checklists. In another example, a quality reviewer may audit the peer review. In another example, an author and/or a reviewer may cleanse peer reviewed data to remove information from the model before providing to third parties (i.e., to remove intellectual property from model).

One of more exemplary peer review requirements are now described. The peer review requirements may include an indication that the review passed or failed; details of the scope and depth of the review; unambiguous and unique identification of the configuration item(s) under review; result details used to verify the objective(s) in the review; safety-related details including evidence of system safety involvement; derived requirements including evidence the requirements have been provided to the system safety processes for assessment; evidence of verification independence in objective(s) verified via the review; configuration management of the configuration item(s) (e.g., (a) separate configuration control for each configuration item(s) established and maintained; (b) evidence configuration control of configuration item(s) under review began prior to item(s) being changed, used by traceability analysis, used by other life cycle processes, referenced by other life cycle data, or used for manufacture or loading is recorded; (c) any change to a configuration item is performed with configuration control); traceability to baseline(s) each configuration item is derived from and the output or process the item is associated with, if credit is sought for life cycle activities or data associated with a previous baseline(s) of a configuration item; review storage procedures shall assure archive, data retention, and retrieval of the stored data for 99 years or the life of the active product; assessment of each problem or change recorded with descriptions of the action(s) taken; evidence of quality assurance oversight if the review involves plans or standards; recorded evidence of quality assurance oversight that can be used to generate reports of overall quality oversight of life cycle process reviews; identify the problem report(s) tracking the change(s); evidence of each life cycle process repeated to address changes if the review involves a change to a baseline artifact; record evidence of authority of configuration item release prior to use for manufacture; recorded evidence of an experienced US engineer oversight that can be used to generate reports of the life cycle process reviews, manage and control all changes to products that can be used to generate reports of life cycle process reviews; and/or identify and involve the relevant stakeholders of the process as planned (i.e., members are trained and roles are assigned for people attending the peer reviews; a member who did not produce the work product is assigned to perform the quality assurance role).

Validation rules may be added to execute the peer review properly. For example, the validation rules may require the peer review that is not in a draft review state to require a participant with the role of author. The validation rules may provide rules and constraints built into the model that identify and fix the problem. In embodiments, the system is configured according to one or more constraints. The constraints may ensure the workflow of the peer review process is complied with. The tool may then force the user to follow the peer review process. For example, a constraint may include that a peer review cannot be moved from draft without an artifact, a reviewed item, an author, a reviewer, and description is not empty. By way of another example, a constraint may include that a peer review cannot be moved to closed without an author indicating participation, a reviewer indicating participation, all findings closed, and all checklists complete. By way of another example, a constraint may include that a finding cannot be set to assigned without: a description and a reporter. By way of another example, a constraint may include that a finding cannot be set to assigned without an implementor. By way of another example, a constraint may include that a finding cannot be set to closed without a implementor, an implementation field, and a verifier. By way of another example, a constraint may include that a finding cannot be set to canceled without a cancelation/rejection information. In this regard, a finding should capture who is assigned to the finding, who made the finding, a description of the finding, and a target implementer of the finding.

In embodiments, elements may be associated with other elements by dragging and dropping the elements on top of one other. The system may then automatically create a relationship between the elements based on the stereotype of the elements. For example, an element with a finding stereotype may be dragged and dropped onto an element with a peer review stereotype. The system may be automatically associated the finding with the peer review.

In embodiments, the tool includes one or more layers. The layers may provide a perspective of the model. When reviewing the diagram, findings are made within the model. The finding may make the model difficult to review. The findings may be maintained on a separate layer (e.g., a findings layer). The findings layer may be made visible or invisible to improve the visibility of the model. For example, the memory may maintain the findings layer with the findings element in the separate layer from the other elements of the metamodel and/or the model.

In the present disclosure, the methods, operations, and/or functionality disclosed may be implemented as sets of instructions or software readable by a device. Further, it is understood that the specific order or hierarchy of steps in the methods, operations, and/or functionality disclosed are examples of exemplary approaches. Based upon design preferences, it is understood that the specific order or hierarchy of steps in the methods, operations, and/or functionality can be rearranged while remaining within the scope of the inventive concepts disclosed herein. The accompanying claims may present elements of the various steps in a sample order, and are not necessarily meant to be limited to the specific order or hierarchy presented. It is to be understood that embodiments of the methods according to the inventive concepts disclosed herein may include one or more of the steps described herein. Further, such steps may be carried out in any desired order and two or more of the steps may be carried out simultaneously with one another. Two or more of the steps disclosed herein may be combined in a single step, and in some embodiments, one or more of the steps may be carried out as two or more sub-steps. Further, other steps or sub-steps may be carried in addition to, or as substitutes to one or more of the steps disclosed herein.

From the above description, it is clear that the inventive concepts disclosed herein are well adapted to carry out the objects and to attain the advantages mentioned herein as well as those inherent in the inventive concepts disclosed herein. While presently preferred embodiments of the inventive concepts disclosed herein have been described for purposes of this disclosure, it will be understood that numerous changes may be made which will readily suggest themselves to those skilled in the art and which are accomplished within the broad scope and coverage of the inventive concepts disclosed and claimed herein.

## Claims

1. A system comprising:
a memory (104) maintaining program instructions; and
a processor (102) configured to execute the program instructions causing the processor (102) to configure an object-oriented modeling tool with at least one profile (110);
wherein the at least one profile (110) extends a visual modeling language according to a meta model; the meta model including a peer review element (202), a participant element, a finding element, a checklist element, an artifact element, a participant instance of the participant element, a checklist instance of the checklist element, and a reviewed artifact of the artifact element;
wherein the peer review element (202) is associated with the finding element, the participant instance, the checklist instance, and the reviewed artifact;
wherein the finding element is associated with the reviewed artifact by an against relationship.

2. The system of claim 1, wherein the visual modeling language comprises a unified modeling language (UML); wherein the visual modeling language is extended by a plurality of stereotypes.

3. The system of claim 2, wherein the plurality of stereotypes includes a peer review stereotype defining the peer review element (202); wherein the peer review stereotype includes a review identification, a review state, a change driver, a description, a reference, and a reviewed item.

4. The system of claim 3, wherein the review state includes a draft state, an open state, a completed state, a closed state, and a cancelled state, and optionally wherein the processor (102) is configured to set the review state from the open state to the completed state once all findings are closed or cancelled.

5. The system of claim 2, wherein the plurality of stereotypes includes a participant stereotype defining the participant element; wherein the participant element includes a participant, a role, a duration, and a participant completion.

6. The system of claim 2, wherein the plurality of stereotypes includes a finding stereotype defining the finding element; wherein the finding element includes a finding state, a finding description, a proposed solution, an implementation description, a rejection description, and a finding identification, or wherein the plurality of stereotypes includes an artifact stereotype defining the artifact element; wherein the artifact element includes a starting version, a resulting version, and a reviewed version.

7. The system of claim 2, wherein the visual modeling language is extended by the plurality of stereotypes and a plurality of customizations; wherein the object-oriented modeling tool comprises Cameo, and optionally wherein the plurality of customizations includes a peer review customization defining the peer review element (202); wherein the peer review customization causes the peer review element (202) to own the artifact instance, the checklist instance, the finding element, and the participant instance.

8. The system of any preceding claim, wherein the meta model further comprises at least one reference artifact of the artifact element.

9. The system of any preceding claim, wherein the profile (110) further comprises validation rules executable by the processor (102).

10. The system of claim9, wherein the validation rules comprise the processor (102) requiring the peer review element (202) that is in an open state to require the participant instance with a role of author.

11. The system of claim 1010, wherein the validation rules comprise the processor (102) preventing the peer review element (202) from be changed from a draft state to the open state without a reviewed item, the author, a reviewer, and a description, and/or wherein the validation rules comprise the processor (102) preventing the peer review state from being changed to a closed state without the finding element having a closed state and the checklist instance having a completed state.

12. The system of any preceding claim, wherein the tool includes a findings layer; wherein the findings element is maintained on the findings layer; wherein the findings layer is configurable between visible and invisible.

13. The system of any preceding claim, wherein the processor (102) is configured to set a state of the peer review element (202) to draft when the peer review element (202) is opened, set the state of the peer review element (202) to open when the peer review is initiated, set the state of the peer review element (202) to completed once all finding are closed, and set the state of the peer review element (202) to closed once all checklists are completed, or wherein the processor (102) is configured detect the participant element has a type of quality reviewer and display an audit checklist thereby allowing the participant element to audit the peer review against the audit checklist.

14. The system of any preceding claim, wherein the artifact element is one of a document, a database of information, a software source, or a mechanical model.

15. A method comprising:
executing, by a processor (102), program instructions maintained on a memory (104) medium, the program instructions causing the processor (102) to configure an object-oriented modeling tool with at least one profile (110);
wherein the at least one profile (110) extends a visual modeling language according to a meta model; the meta model including a peer review element (202), a participant element, a finding element, a checklist element, an artifact element, a participant instance of the participant element, a checklist instance of the checklist element, and a reviewed artifact of the artifact element;
wherein the peer review element (202) is associated with the finding element, the participant instance, the checklist instance, and the reviewed artifact;
wherein the finding element is associated with the reviewed artifact by an against relationship.
